(19) Europäisches Patentamt
European Patent Office
Office européen des brevets

(11) Publication number: **0 286 614 B1**

# EUROPEAN PATENT SPECIFICATION

(45) Date of publication of patent specification :
18.12.91 Bulletin 91/51

(51) Int. Cl.⁵ : **H04B 7/26, H04Q 7/02, H04J 3/06**

(21) Application number : 88850108.7

(22) Date of filing : 30.03.88

(54) **Method and equipment for synchronizing and transmitting information in a radio communication network.**

(30) Priority : 03.04.87 SE 8701414

(43) Date of publication of application :
12.10.88 Bulletin 88/41

(45) Publication of the grant of the patent :
18.12.91 Bulletin 91/51

(84) Designated Contracting States :
DE FR GB IT NL

(56) References cited :
EP-A- 0 037 519
DE-B- 2 659 635
TELCOM REPORT, Vol 8, no 2, 1985, pages
85-90, Berlin, DE; K KAMMERLANDER:
"Eigenschaften des zellularen Mobilfunksys-
tems C 450/900"

(73) Proprietor : TELEFONAKTIEBOLAGET L M
ERICSSON
S-126 25 Stockholm (SE)

(72) Inventor : Persson, Bengt Yngve
Box 42
S-182 51 Djursholm (SE)

## Description

## TECHNICAL FIELD

The present invention relates to a radio communication network comprising fixed radio base stations and movable mobile stations and a plurality of radio traffic channels, the base stations being arranged in a cellular system in the radio communication network, and share a radio control channel in time multiplex depending on the cellular system, such that each base station disposes a frame with time slots within a super frame on the control channel. More specifically, the invention relates to a method and equipment for synchronizing and transmitting information in such a radio communication network.

## BACKGROUND ART

Telecommunication networks in which information is transmitted on a plurality of radio channels between base stations and mobile stations have been well known for several years. In such networks it is well known to organize the base stations in a cellular system for effectively utilizing available frequency bands. Among radio communication networks with large general coverage may be mentioned the Nordic mobile telephone systems, in which speech transmission on the radio channels between base stations and mobile stations takes place analogously. Several mobile telephone systems with digital transmission of speech on the radio channels between base stations and mobile stations have also been proposed.

It is taught by K. Kammerlander, H.J.v.d. Neyen "Aufgaben und Strukturen der Funkfeststation im Netz C der DBP and P. Donat, G. Merward, W. Riedel "Netzsynchronität und Verbindungsumschaltung im Netz C der DBP, both in the NTG-Fachberichte Bewegliche Funkdienste, Band 90, to have a special organizational radio channel in telecommunication networks for call and control signals between base stations and mobile stations. The base stations in the cellular system share in groups in time multiplex an organizational radio channel so that each base station disposes a time slot within a frame on the organizational radio channel. In its time slot each base station transmits call and control signals on the organizational radio channel to mobile stations at predetermined times in relation to an internal time reference in the base station. The base stations can transmit information simultaneously on one or more radio traffic channels to one or more mobile stations.

For network synchronization, a base station closes down its transmitters for the radio traffic channels during about 75 ms about every tenth minute and receives call and control signals sent from one or more other base stations in their frames on the organizational radio channels. The temporary shut down takes place to reduce noise on the reception of the call and control signals. In speech transmission the temporary shut down is noticeable as a click every tenth minute, which can be regarded as acceptable. Any time difference between the internal time reference of a base station and the internal time reference of at least one other base station is determined with the aid of a correlator and the received call and control signals from other base stations. Eventual time differences between the time references are utilized for changing the time references so that the time differences decrease.

## DISCLOSURE OF THE INVENTION

For several known reasons it is desirable to synchronize base stations in a telecommunication network in which information is transmitted on a plurality of radio traffic channels between base stations and mobile stations. It is particularly desirable here that the synchronization does not require extra transmitters and extra radio channels. It is further a desire to be able to transmit information which is more sensitive than speech to intermittent interruptions in the transmission to and from mobile stations in a radio communication network. A particular desire in such a case is that the transmission of information between the base station and mobile stations shall effectively utilize available radio channels and transmission capacity. In radio communication networks of the kind in question it has so far been a problem to simultaneously satisfy these desires. The invention has the object of solving this problem.

One object of the present invention is to create a method and equipment in radio communication networks with base stations and mobile stations which will enable synchronization of the base stations without this causing unacceptable interruptions in transmitting interruption-sensitive information between base stations and mobile stations.

Another object of the present invention is to create a method and equipment in radio communication networks with base stations and mobile stations which will enable synchronization of the base stations without requiring any extra transmitters or without sending any extra synchronization signals from existing transmitters in the base stations.

A still further object of the present invention is to create a method and equipment in radio communication networks with base stations and mobile stations which will enable synchronization of the base stations and transmission of information such that available radio channels and transmission capacity is utilized effectively.

What is distinguishing for a method and equipment in accordance with the present invention, and preferred embodiments thereof, is disclosed in the independent claims 1 and 5 and the dependent claims 2-4 and 6-8.

Summarily and somewhat simplified, it can be said that in a method in accordance with the invention the transmission of information between base stations and mobile stations takes place in time multiplex on the radio traffic channels, the mobile stations being each allocated a time slot on a radio traffic channel. Analogue information which is to be transmitted on such a channel is digitalized before transmission. In addition, the information which is to be transmitted on a radio traffic channel between a base station and a mobile station is encoded before transmission, using an error-correcting code which extends over two or more time slots of the mobile stations on the radio traffic channel. If the transmission on the radio traffic channels from a base station interferes to a too great extent with reception at this base station of call and control signals from other base stations, the transmission on the radio traffic channels from this base station is interrupted intermittently during a time which is at least as long as a time slot and at most as long as a frame on a radio traffic channel.

If there are time slots at a base station when no information is to be transmitted on any radio traffic channel, the reception at this base station of call and control signals from other base stations preferably takes place during these time slots. Call and control signals received at this base station during these time slots may be primarily used for determining time differences at this base station.

At a base station, the affected mobile stations are preferably allocated time slots on the radio traffic channels as far as possible such that no information will be transmitted on any such channel from the base station in certain time slots.

Any interruption in the transmission on the radio traffic channels from a base station preferably takes place in at most one of the frames in a super frame on the radio control channel.

In summary and somewhat simplified, it may be said that the equipment in accordance with the invention includes time multiplex means at the base stations for transmitting information between base stations and mobile stations in time multiplex on the radio traffic channels, during transmission, these means being adapted to allocate each of the mobile stations at a time slot in a succession of frames on a radio traffic channel. The equipment also includes digitalizing means for digitalizing analogue information which is to be transmitted on the channels. Furthermore, the equipment includes encoding means at the base stations and mobile stations for encoding information which is to be transmitted on a radio traffic channel between a base station and a mobile station using an error-correcting code which covers time slots in two or more successive frames on the radio traffic channel of the mobile station. Furthermore, the equipment includes transmission interruption means at the base stations for briefly interrupting transmission from a base station on the radio traffic channels if the transmission on them interferes too greatly with the reception at the base station of call and control signals from other base stations. The transmission interruption means are adapted to interrupt the transmission, where appropriate, during a time which is at least equally as long as a time slot and at most equally as long as a frame on a radio traffic channel.

The reception means are preferably adapted such as to receive call and control signals at a certain base station from other base stations during time slots when no information is to be transmitted on any radio traffic channel from that base station, should such time slots be present. In such a case the time difference measurement means are preferably adapted such as to primarily use call and control signals received at that base station during these time slots for determining any time differences.

The time multiplex means at a base station are preferably adapted such as to allocate to the mobile stations time slots on the radio traffic channels as far as possible such that no information will be transmitted on any such channel from the base station in one or more certain time slots.

The transmission interruption means are preferably adapted such as to interrupt the transmission, in appropriate cases, on the radio traffic channels from a base station during at most one of the frames in a super frame on the radio control channel.

A method and equipment in accordance with the invention brings with it several advantages, which are accentuated in the preferred embodiments. Heavily simplified, these advantages can be said to signify that no particular transmitter or synchronizing signals are needed for the synchronization, that the need of interrupting the transmission from base stations on the radio traffic channels due to a synchronization is reduced or eliminated, and that the damaging effects of possible interruption in the transmission from the mobile stations due to synchronization is reduced or eliminated. In addition, effective utilization of available radio channels is enabled. Further advantages will be understood by one skilled in the art after studying the following description of preferred embodiments.

BRIEF DESCRIPTION OF DRAWINGS

Figure 1 illustrates, heavily simplified, some base stations and mobile stations in a radio communication network.

Figure 2 illustrates the distribution of time slots on radio traffic channels,

Figure 3 illustrates the distribution of frames and time slots within a super frame on a radio control channel.

Figure 4 is a simplified block diagram of parts of a mobile station.

Figure 5 is a simplified block diagram of parts of a base station.

## BEST MODES FOR CARRYING OUT THE INVENTION

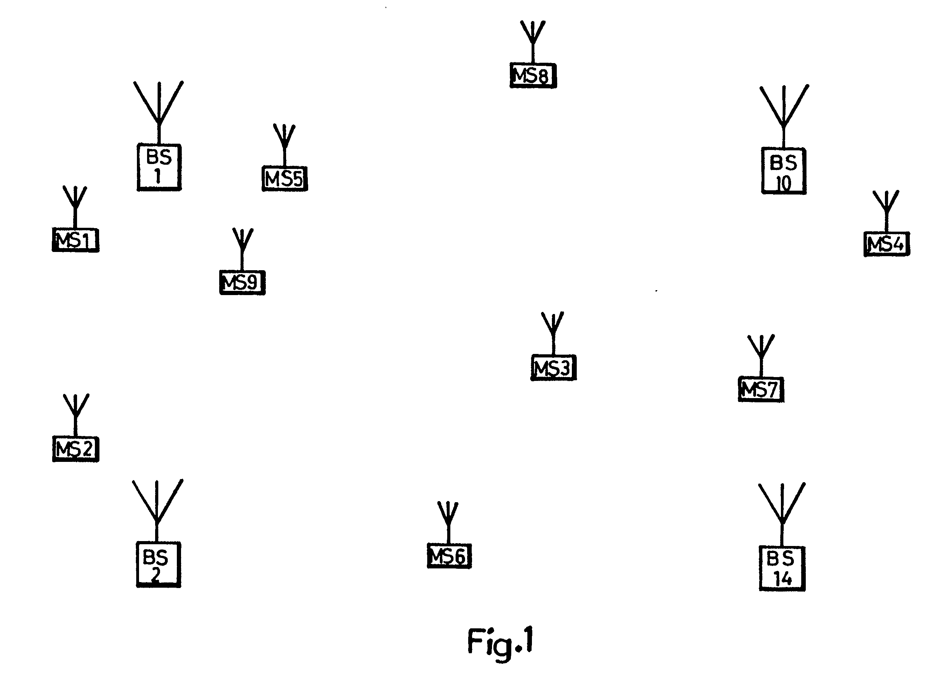

Base stations BS1, BS2,... and mobile stations MS1, MS2,... in a radio communication network are illustrated heavily simplified in Figure 1. In addition to the illustrated base stations and mobile stations there may be a large number of further stations in the radio communication network. Furthermore there are mobile switching centres in the fixed part of the telecommunication network, which are adapted for transmitting information in the fixed part of the network between base stations. The base stations are conventionally arranged in a cellular system according to a nine-cell plane.

For transmitting information between base stations and mobile stations there is a total of 80 duplex-type radio traffic channels. Of these, a base station normally only disposes over a lesser number, and different base stations can dispose over different numbers of such channels. Different base stations can also dispose completely or partially over different channels, depending on how they are arranged in the cellular system. Base stations which are at a sufficiently great distance from each other can dispose over the same radio traffic channels.

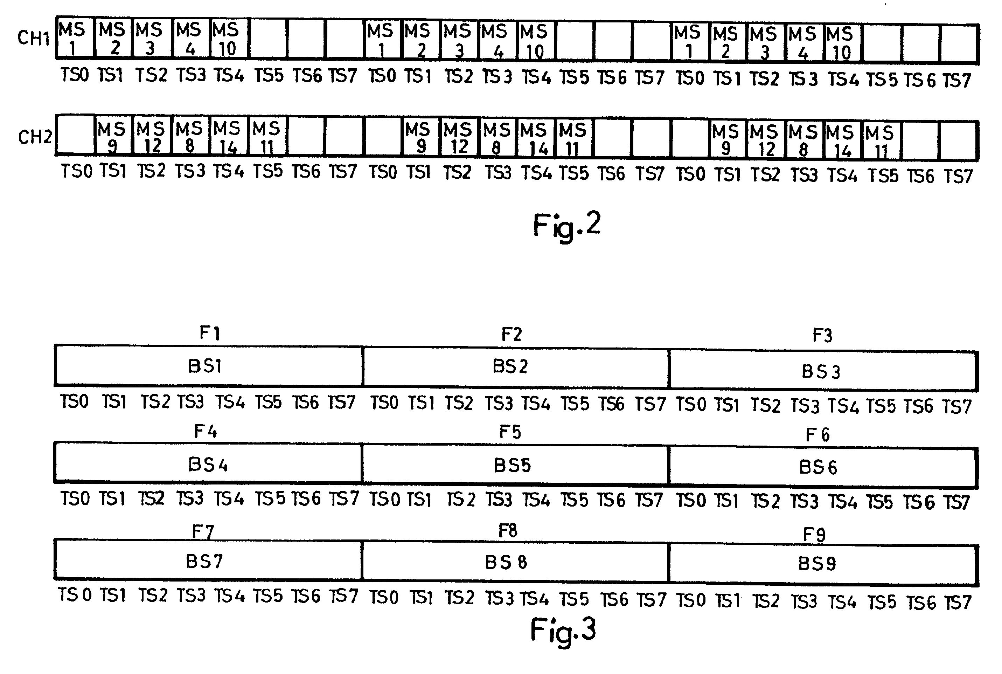

Transmission takes place in time multiplex on all of the radio traffic channels so that each mobile station is allocated a time slot on a channel. In Figure 2 it is illustrated how the time slots TS0, TS1, TS2, TS3, TS4 on the channel CH1 in a direction from a base station are allocated to the mobile stations MS1, MS2, MS3, MS4 and MS10. The time slots TS5, TS6 and TS7 on the channel CH1 in a direction from the base station have not been allocated to any mobile station and are unoccupied. On the channel CH2 the time slots TS1, TS2, TS3, TS4 and TS5 in a direction from the base station have been allocated the mobile stations MS9, MS12, MS8, MS14 and MS11. The time slots TS0, TS6 and TS7 on the channel CH2 in a direction from the base station have not been allocated to any mobile station and are unoccupied. If a base station only disposes over the channels CH1 and CH2 for a distribution of time slots according to Figure 2, it has no information to transmit on any radio traffic channel during the time slots TS6 and TS7.

There is a special duplex-type radio control channel in the radio communication network for call and control signals. Transmission also takes place in time multiplex on the radio control channel. Dependent on its place in the cellular system, each base station is allocated a frame with time slots within a super frame on the radio control channel. In Figure 3 it is illustrated how frames are allocated on such a channel, i.e. the base station BS1 is allocated the frame F1 with eight time slots TS0, TS1... TS7, base station BS2 the frame F2 with eight time slots TS0, TS1,... TS7, base station BS3 the frame F3 with eight time slots TS0, TS1,... TS7 etc. The time slots and frames on the radio control channel have the same length as the time slots and frames on a radio traffic channel.

According to Figure 3, each of the nine base stations disposes over its own frame on the radio control channel, within a super frame comprising nine frames. That precisely nine frame are included in a super frame on the radio control channel is due to the base stations being conventionally arranged in a cellular system according to a nine-cell plane. At a sufficient distance from one of the base stations, e.g. BS5, the cellular system of the radio communication network may have one or more base station also disposing over frame F5 on the radio control channel. Similarly, at a sufficiently great distance from another of the base stations, e.g. base station BS2, there may be one or more base stations which also dispose over frame F2 on the radio control channel. The same applies for remaining frames within the super frames on the radio control channels.

Each base station transmits in its frame call and control signals on the radio control channel to served mobile stations at predetermined times in relation to an internal time reference in the base station. Since each frame on the radio control channel includes eight time slots, a base station can transmit eight call and control signals in each super frame, these signals can partly relate to general information to all mobile stations within the area for the base station, and partly to selective information to individual mobile stations. The control signals from the base station on the radio control channel may, for example, relate to time slot distribution and other signalling to the concerned mobile stations after access.

Since the radio control channel is a duplex channel like the radio traffic channels, the mobile stations can communicate with a base station on the control channel, e.g. for calling up. The mobile stations can also use the call and control signals transmitted from the base stations on the control channel for comparing the signal strength of different base stations.

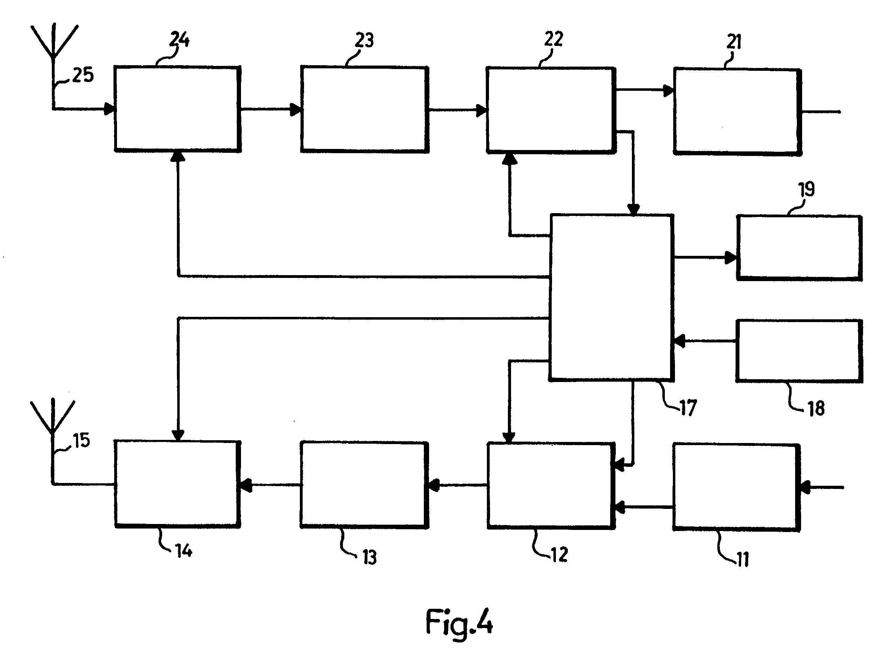

A simplified block diagram of a mobile station in a radio communication network of the kind described in conjunction with figures 1-3 is illustrated in Figure 4. This mobile station is intended for both speech and data transmission. It includes a microphone 10 coupled to a speech encoder 11, which digitalizes speech information from the microphone. Via first switching means 12 the speech encoder 11 is connected to a channel encoder 13. The channel encoder is connected to a radio transmitter 14. The transmitter is connected to an antenna 15.

A radio receiver 24 is connected to an antenna 25, which may be the same one as the antenna 15. The receiver is connected to a channel decoder 23, which is connected to a speech decoder 21 via a second switching means 22. The speech decoder 21 is connected to a sound reproduction means 20 and decodes digital information into analogue sound information.

A control unit 17 has a first data input connected to data input means 18 and a first data output connected to the first switching means 12. The unit 17 further has a second data input connected to the second switching means 22, and a second data output connected to a data output means 19. In addition, the control unit has control outputs connected to the radio transmitter and receiver as well as the switching means.

In transmitting speech from a mobile station to a base station, the speech is digitalized in the speech encoder 11 before transmission. The digital signals representing speech are taken via the first switch to the channel encoder 13, where they are coded for transmission on a radio traffic channel, using an error-correcting code extending over three or more successive time slots allocated to the mobile station on the radio traffic channel. The transmitter time compresses the digital signals and transmits them at high speed during a time slot under the control of control signals from the control unit.

In transmission of data from the mobile station to a base station, data is supplied to the control unit 17 by the data input means 18. Digital signals representing supplied data are taken from the control unit via the first switching means 12 to the channel encoder 13, where they are coded in the same way as digital signals from the speech encoder. The digital signals from the control unit are subsequently transmitted via the transmitter in the same way as speech.

In transmitting speech from a base station to a mobile station on a radio traffic channel, digital signals are received in the receiver at high speed in a time slot under the control of signals from the control unit 17. The digital signals are expanded in time and taken from the receiver 24 to the channel decoder 23, where error-correcting decoding takes place, which is in principle an inversion of the encoding which took place in the channel encoder 13. The digital signals from the channel decoder are supplied to the speech decoder 21 via the second switching means 22. The digital information from the switching means is decoded in the speech decoder to analogue sound information.

In transmitting data from a base station to a mobile station, the digital signals from the channel decoder are supplied via the second switching means 22 to the control unit 17 instead of to the speech decoder 21. Data from the control unit are supplied to the data output means 19.

Via its control outputs the control unit 17 can control the transmitter 14 and receiver 24, inter alia, for selection of radio traffic channel and time slot. In addition, the control unit can actuate the switching means via its control outputs so that the means transmit and receive either speech information or data.

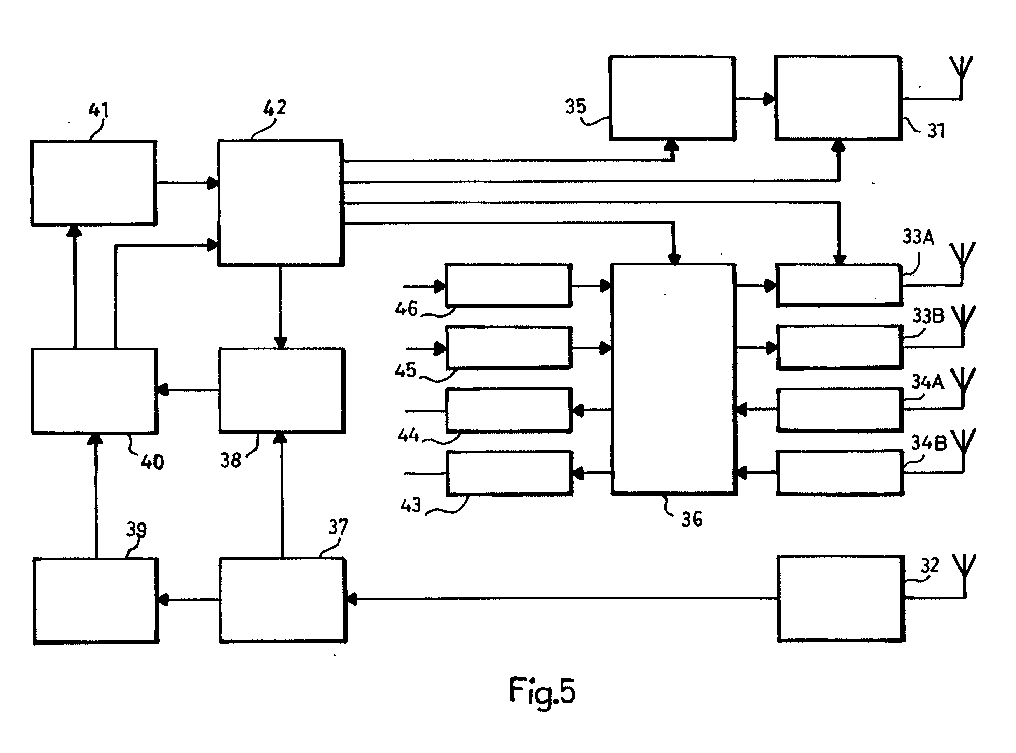

A simplified block diagram of a base station in a radio communication network of the kind described in connection with figures 1-3 is illustrated in Figure 5. The base station includes a first radio transmitter 31 for the radio control channel, a first radio receiver 32 for the radio control channel, two second radio transmitters 33A and 33B for a radio traffic channel each, and two second radio receivers 34A and 34B for a radio traffic channel each. The receivers and transmitters are connected to antennas via duplex filters and possible also combiners not illustrated in the figure. The first transmitter is connected to a data transmission means 35 for receiving call and control information which is to be sent from the base station on the radio control channel. Each second transmitter is connected to an output of a multiplexing and demultiplexing means 36 for receiving information which is to be transmitted to the mobile stations on the radio traffic channels. The first receiver is coupled to an input of a receiver synchronizing means 37 for transmitting call and control information received from other base stations on the radio control channel. The receiver synchronizing means 37 has outputs connected to a time difference measurement means 38 and a time slot identification means 39. The time difference measurement means and the time slot identification means have outputs connected to inputs of a regulation means 40. The regulation means has a control output connected to a control input of a clock means 41 and another output connected to an input of a timing means 42. The clock means 41 has an output for clock signals connected to an input of the timing means 42, which has an output for super frame synchronization signals connected to an input of the time difference measurement means 38. In addition, the timing means 42 has control outputs connected to control inputs of the data transmission means 35, the first transmitter 31, the second transmitters 33A and 33B as well as the multiplexing and demultiplexing means 36. The latter has outputs connected to channel decoders 43, 44 and inputs connected to channel encoders 45 and 46. The channel decoders have outputs and the channel encoders inputs which, via digital links, not illustrated in Figure 4, are connected to a digital mobile switching center in the communication network.

In transmission on the radio traffic channels of information from the switching center via the base station to mobile stations, information from the switching center is transmitted via the digital links to the channel encoders 45 and 46. Information is coded in the channel encoders before transmission, using an error-correcting code extending over time slots in three or more frames on a radio traffic channel. In the multiplexing and demultiplexing means 36 the coded information is distributed to slots in the radio traffic channels. This distribution is not always the same, and may vary depending on which mobile stations are within the transmission and receiving range or cell of the base station. The information which is to be transmitted to the second radio transmitter is supplied from the multiplexing and demultiplexing means.

In transmission of information from mobile stations to base stations on the radio traffic channels, received information is transmitted from the second receivers 34 A and 34 B to the multiplexing and demultiplexing means 36. Information from the second receivers is distributed by the multiplexing and demultiplexing means to the channel decoders. An error-correcting decoding of received information takes place in the channel decoders such that it is in principle the inverse of the error-correcting coding in the channel encoders. The decoded information from the channel decoders is transmitted via the digital links to the digital switching center.

The time reference of the base station is synchronized with the time references of other base stations with the aid of call and control signals on the radio control channel. Since the base station only disposes over one frame in a super frame on the radio control channel for transmission, call and control signals from other base stations can be received during the other frames in the super frames. Since each base station transmits call and control signals in the time slots in its frame, on the radio control channel at predetermined times in relation to its internal time reference, the time for receiving call and control signals from other base stations gives information as to the internal time references of these base stations. The time difference measurement means measures the time position for received call and control signals in relation to the super frame synchronization signal from the time control means. Information as to the time position is transmitted to the regulation means. With the aid of identification information in the received call and control signals, giving the identity of the transmitting base station and its time slot within the super frame, the time slot identification means can send information to the regulation means as to the identity of the transmitting base station, and what time position the received call and control signals can be expected to have, taking radio propagation time into account, if the internal time reference of the transmitting base station agrees with the internal time reference of the receiving base station. With the aid of the measured time position from the time difference measurement means and the expected time position from the time slot identification means, the regulation means can determine a possible time difference between the local internal time reference in the base station and the internal time reference of the transmitting base station. In response to this time difference, and preferably corresponding time differences in relation to further base stations, the call and control signals of which have been received on the radio control channel, the regulation means generates a control signal which is supplied to the clock means. The clock means is sensitive to the control signal from the regulation means such that the time position for the clock signals to the time control means is responsive to the control signals. The super frame synchronization signal, which can be regarded as the internal time reference of the base station, has in turn a time position responsive to the clock signals from the clock means.

The time positions for signals from the time control means to the transmitters as well as the multiplexing and demultiplexing means have in turn a time position responsive to the super frame synchronization signal and clock signals.

If call and control signals from other base station on the radio control channel come to a base station simultaneously as the base station transmits on one or more of the traffic channels, there is a risk that the local transmission of the base station interferes too greatly with the reception. Inter alia, this is because the duplex filter does not give any protection to signals on the radio control channel which are sent from other base stations and are in the same duplex band as the transmission frequencies of the radio traffic signals. For solving this problem, each second transmitter includes transmitter interruption means arranged, on command from the timing means to briefly interrupt the base station transmission on all the radio traffic channels for a time which is at least equally as long as a time slot and at most equally as long as a frame on a radio traffic channel. However, if there are time slots at the base station when no information is to be sent on any radio traffic channel from the base station, then reception of call and control signals from other base stations takes place during these time slots. The need of interrupting the base station transmission on the radio traffic channels is thus reduced or eliminated.

In order to avoid, if possible, interrupting the transmission on the radio traffic channels, the mobile station with which the base station communicates are as far as possible allocated time slots on the radio traffic channels such that no information will be sent on any such channel from the base station in certain time slots, e.g. according to Figure 2.

If, in spite of everything, the transmission on the radio traffic channels must be interrupted, the transmission is interrupted during at most one of the frames in a single super frame on the radio control channel. The interruption in transmission between a base station and a particular mobile station is then limited to one time slot within a super frame. Due to the error-correcting encoding in the channel encoders and the decoding in the channel decoders, as well as that the encoding includes a slot in three or more successive frames for a mobile station, the transmission can take place without interruption in most cases. Alternatively, more than one transmission interruption may occur in a single super frame in which case the interruptions take place so that no time slot is interrupted more than once or possibly twice in the same super frame.

With the aid of the information as to the identity of the transmitting base stations supplied by the time slot identification means, the regulation means can discover whether acceptable call and control signals are not received from another base station, the internal time reference of which is needed for the synchronization of the base station during a longer time than what can be accepted with regard to the frequency accuracy of the clock means, e.g. 30 seconds. The regulation means is connected directly to the timing means for sending interruption signals demanding transmission interruption. The interruption signals cause, via the timing means, that the transmission from the second transmitter is briefly interrupted. Each interruption has then a duration of at least one time slot and at most one frame.

Primarily base stations, but possibly also mobile stations in a telecommunication network can naturally contain a number of means and functions which are not illustrated in Figure 3 or 4 and have not been dealt with in the description hereinbefore. These are, however, of subordinate importance for the invention and may be of a kind known per se, for which reason it should not be necessary to describe them here. The error-correcting code, channel encoders channel decoders, speech encoders and speech decoders may also be of types known per se, and thus it is unnecessary to describe them here. The distribution of frames within the super frames and the radio traffic channels on the base stations may take place according to principles known per se, and are therefore not described here. Against the background of what is known per se in connection with synchronization, and not least from what is known from the given references, it would not appear necessary here to further describe details in the synchronization of the time references. Against the background of what is known within the field of mobile telephony, neither would it appear necessary to describe a protocol in the establishment of communication between the base stations and mobile stations or remaining signalling between them.

A method and equipment in accordance with the invention does not need to agree in all details with what has been described in connection with figures 1-5. For example, a 7, 12 or 21 cellular plan can be used instead of a 9 cellular plane.

Certain mobile stations can also be intended solely for transmission of digital information and therefore lack microphone, speech encoder and speech decoder. A base station can have more than two transmitters for radio traffic channels and have more than two channel encoders and two channel decoders when more than two radio traffic channels are used by the base stations.

## Claims

1. Method of synchronizing and transmitting information in a telecommunication network with fixed base stations (BS1, BS2,...) and movable mobile stations (MS1, MS2,...), information being transferred between base stations and mobile stations on a plurality of radio traffic channels (CH1, CH2, ...), the base stations being arranged in a cellular system and depending on the cellular system are allocated a frame (F1, F2,...) with time slots (TS0, TS1,...) within a super frame on a radio control channel, call and control signals being sent on the radio control channel from each base station to the mobile stations in the base station frame at predetermined times in relation to an internal time reference in the base station, said call and control signals being provided with identification information giving the identity of the transmitting base station, the base stations receiving call and control signals sent from the other base stations on the radio control channel, possible time differences between the internal time references of the base stations being determined at the base stations with the aid of the received call and control signals, such that the determined time differences are utilized at the base stations for adjusting their internal time references, characterized in that the transmission of information between base stations and mobile stations on the radio traffic channels takes place in time multiplex, each of the mobile stations being allocated a sequence of time slots on a radio traffic channel, in that any analogue information which is to be transferred on the radio traffic channels is digitalized before transmission in that information which is to be transmitted between a base station and a mobile station on a radio traffic channel is encoded with error-correcting coding before transmission, said coding extending over three or more time slots allocated to the mobile station on the radio traffic channel, and in that if the transmission on the radio traffic channels from a base station interferes too greatly with the reception at the base station of call and control signals from other base station, the transmission is intermittently interrupted for a time which is at least equally as long as a time slot and at most equally as long as a frame on a radio traffic channel.

2. Method as claimed in claim 1, characterized in that where there are time slots when no information is to be sent on any radio traffic channel from a base station, the reception at this base station, of call and control signals from other base stations on the radio control channel takes place during these time slots when no information is to be transmitted, and in that call and control signals received during these time slots when no information is to be transmitted are primarily used for determining time differences at the base station, whereby the need of interrupting the transmission on the radio traffic channels is reduced or eliminated at the base station.

3. Method as claimed in claim 2, characterized in that the mobile stations associated with a base station are as far as possible allocated time slots on the radio traffic channels such that no information shall be transmitted on any such channel from the base station in certain time slots.

4. Method as claimed in any one of the preceding claims, characterized in that the transmission on the radio traffic channels from a base station are interrupted either during at most one of the frames in any super frame on the radio control channel or such that no time slot is interrupted more than twice in the same super frame, in order not to interfere too greatly with the reception at the base station of call and control signals.

5. Equipment for synchronizing and transmitting information in a radio communication network, said network including base stations (BS1, BS2,...) and mobile stations (MS1, MS2) adapted for transmission between them of information on a plurality of radio traffic channels (CH1, CH2,....), said base stations being organized in a cellular system and, depending on the cellular system, share a radio control channel in time multiplex so that each base station disposes over a frame (F1, F2,...) with time slots within a super frame on the radio control channel, said base stations including means (31, 35) for sending to the mobile stations call and control signals on the radio control channel in their frames at predetermined times in relation to their respective internal time references, said call and control signals including identification information giving the identity of the transmitting base stations, said equipment including

a) reception means (32, 37) at the base stations for receiving call and control signals sent from the other base stations on the radio control channel,

b) time difference measurement means (38) at the base stations for determining with the aid of the received call and control signals possible time differences between the internal time references of the base stations, and

c) regulation means (40) at the base stations for adjusting the internal time references of the base stations with the aid of possible determined time differences,

the equipment being characterized by time multiplex means (36) at the base stations for transmitting information between the base stations and mobile stations in time multiplex on the radio traffic channels, said multiplex means being adapted such that on transmission they allocate each of the mobile stations a succession of time slots on a radio traffic channel, by digitalizing means (11) at the mobile stations for digitalizing analogue information which is to be transmitted on the radio traffic channels, by encoding means (12, 45, 46) at the base stations and mobile stations for encoding information which is to be transferred between a base station and a mobile station on a radio traffic channel using an error-correction code extending over two or more successive time slots of the mobile station on the radio traffic channel, by transmission interruption means at the base stations for intermittently interrupting the transmission on the radio traffic channels from a base station if the transmission on such channels interferes too greatly with the reception at the same base station of call and control signals from other base stations, and in that the transmission interruption means are adapted, where appropriate, to intermittently interrupt the transmission during a time which is at least equally as long as a time slot and at most equally as long as a frame on a radio traffic channel.

6. Equipment as claimed in claim 5, characterized in that the reception means are adapted, where time slots are present when no information is to be sent on any radio traffic channel from a base station, to receive call and control signals from other base stations during these time slots when no information is to be transmitted, and in that the time difference measurement means are adapted to use primarily call and control signals received during these time slots for determining possible time differences.

7. Equipment as claimed in claim 6, characterized in that the time muliplex means at a base station allocates time slots on the radio traffic channels to the mobile stations as far as possible such that no information will be transmitted on any radio traffic channel from the base station in certain time slots.

8. Equipment as claimed in any one of claims 5-7, characterized in that the transmission interruption means interrupt, in appropriate cases, the transmission on the radio traffic channels from a base station, either during at most one of the frames in a super frame on the radio control channel or so that no time slot is interrupted more than twice in the same super frame.

**Patentansprüche**

1. Verfahren zum Synchronisieren und Senden von Informationen in einem Telekommunikationsnetz mit festen Basisstationen (BS1, BS2,...) und beweglichen Mobilstationen (MS1, MS2,...), wobei die Information zwischen Basisstationen und Mobilstationen über eine Vielzahl von Funkverkehrskanälen (CH1, CH2,...) gesendet wird ; die Basisstationen in einem Zellensystem angeordnet sind, wobei ihnen in Abhängigkeit vom Zellensystem auf einem Funksteuerkanal innerhalb eines Superrahmens ein Rahmen (F1, F2,...) mit Zeitschlitzen (TS0, TS1,...) zugewiesen ist; wobei über den Funksteuerkanal Ruf- und Steuersignale von jeder Basisstation zu den Mobilstationen innerhalb des Basisstationsrahmens zu vorbestimmten Zeiten relativ zu einer internen Zeitreferenz in der Basisstation, gesendet werden ; die Ruf- und Steuersignale mit Identifikationsinformationen über die Identität der sendenden Basisstation versehen sind ; wobei die Basisstationen die von anderen Basisstationen gesendeten Ruf- und Steuersignale über den Funksteuerkanal empfangen ; mögliche Zeitdifferenzen zwischen den internen Zeitreferenzen der Basisstationen in den Basisstationen mit Hilfe der empfangenen Ruf- und Steuersignale bestimmt werden, derart, daß die bestimmten Zeitdifferenzen in den Basisstationen zur Abstimmung ihrer internen Zeitreferenzen benutzt werden, dadurch gekennzeichnet, daß die Übertragung von Informationen zwischen Basisstationen und Mobilstationen über die Funkverkehrskanäle im Zeitmultiplex stattfindet, wobei jeder Mobilstation auf einem Funkverkehrskanal eine Folge von Zeitschlitzen zugewiesen ist ; daß jede über die Funkverkehrskanäle zu sendende analoge Information vor der Übertragung digitalisiert wird ; daß Informationen, die über einen Funkverkehrskanal zwischen einer Basisstation und einer Mobilstation gesendet werden sollen, vor der Übertragung mittel Fehlerkodierung verschlüsselt werden, wobei sich die Kodierung über drei oder mehr den Mobilstationen auf dem Funkverkehrskanal zugewiesenen Zeitschlitzen erstreckt ; und daß im Falle, daß die Übertragung seitens einer Basisstation über die Funkverkehrskanäle in der Basisstation zu sehr mit dem Empfang von Ruf- und Steuersignalen einer anderen Basisstation interferiert, die Übertragung intermittierend während einer Zeitdauer unterbrochen wird, die mindestens ebenso lang wie ein Zeitschlitz und höchstens ebenso lang wie ein Rahmen auf einem Funkverkehrskanal ist.

2. Verfahren nach Anspruch 1, dadurch gekennzeichnet, daß bei vorhandenen Zeitschlitzen im Falle, daß von einer Basisstation keine Information über irgendeinen Funkverkehrskanal gesendet wird, in dieser Basisstation der Empfang von Ruf- und Steuersignalen über den Funksteuerkanal während dieser Zeitschlitze erfolgt, wenn keine Information übertragen wird ; und daß die Ruf- und Steuersignale, die während dieser Zeitschlitze empfangen werden, wenn keine Information übertragen werden muß, in erster Linie zur Ermittlung von Zeitdifferenzen in der Basisstation benutzt werden, wodurch in der Basisstation die Notwendigkeit zur Unterbrechung der Übertragung auf den Funkverkehrskanälen reduziert oder eliminiert wird.

3. Verfahren nach Anspruch 2, dadurch gekennzeichnet, daß den mit einer Basisstation verbundenen Mobilstationen so weit wie möglich Zeitschlitze auf den Funkverkehrskanälen in der Weise zugewiesen werden, daß in bestimmten Zeitschlitzen von der Basisstation keine Information über irgendeinen dieser Kanäle gesendet wird.

4. Verfahren nach einem beliebigen vorhergehenden Anspruch, dadurch gekennzeichnet, daß die Sendung einer Basisstation über die Funkverkehrskanäle entweder während der Dauer von höchstens einer der Rahmen in einem beliebigen Superrahmen des Funkverkehrskanals unterbrochen wird, oder aber derart, daß kein Zeitschlitz öfter als zweimal im gleichen Superrahmen unterbrochen wird, um den Empfang von Ruf-Steuersignalen in der Basisstation nicht zu sehr zu stören.

5. Ausrüstung zum Synchronisieren und Senden von Informationen in einem Funkverkehrsnetz, wobei das Netz Basisstationen (BS1, BS2,...) und Mobilstationen (MS1, MS2) aufweist, die für die Übertragung von Informationen untereinander über eine Vielzahl von Funmkverkehrskanälen (CH1, CH2,...) ausgelegt sind ; wobei die Basisstationen in einem Zellensystem angeordnet sind und, in Abhängigkeit vom Zellensystem, sich im Zeitmultiplex einen Funkverkehrskanal teilen, so daß jede Basisstation über einen Rahmen (F1, F2,...) mit Zeitschlitzen innerhalb eines Superrahmens des Funksteuerkanals verfügt ; wobei die Basisstationen Mittel (31, 35) zum Senden von Ruf- und Steuersignalen über den Funksteuerkanal an die Mobilstationen in ihren Rahmen, in vorbestimmten Zeiten relativ zu ihren jeweiligen internen Zeitreferenzen, aufweisen ; wobei die Ruf- und Steuersignale Identifikationsinformationen über die Identität der sendenden Basisstationen umfassen ; und die genannte Ausrüstung folgende Mittel aufweist :

a) Empfangsmittel (32, 37) in den Basisstationen zum Empfangen der von den anderen Basisstationen über den Funksteuerkanal gesendeten Ruf- und Steuersignale ;

b) Zeitdifferenzmeßmittel (38) in den Basisstationen zum Bestimmen möglicher Zeitdifferenzen zwischen den internen Zeitreferenzen der Basisstationen mit Hilfe der empfangenen Ruf- und Steuersignale ; und

c) Regelungsmittel (40) in den Basisstationen zum Abstimmen der internen Zeitreferenzen der Basisstationen mit Hife von möglichen, festgesetzten Zeitdifferenzen ;

wobei die Ausrüstung gekennzeichnet ist durch Zeitmultiplexmittel (36) in den Basisstationen zum Übertragen von Informationen zwischen den Basisstationen und den Mobilstationen im Zeitmultiplex über die Funkverkehrskanäle, und die Multiplexmittel so ausgelegt sind, daß sie beim Senden jeder Mobilstation eine Folge von Zeitschlitzen auf einem Funkverkehrskanal zuweisen ; durch Digitalisiermittel 811) in den Mobilstationen zum Digitalisieren analoger Informationen, die über die Funkverkehrskanäle übertragen werden müssen ; durch Kodiermittel (12, 45, 46) in den Basisstationen und in den Mobilstationen zum Verschlüsseln von Informationen, die zwischen einer Basisstation und einer Mobilstation auf einem Funkverkehrkanal übertragen werden müssen, unter Verwendung eines Fehlerkorrekturkodes, der sich über zwei oder mehrere aufeinanderfolgende Zeitschlitze der Mobilstation auf dem Funkverkehrskanal erstreckt ; durch Sendeunterbrechungsmittel in den Basisstationen zum intermittierenden Unterbrechen der Übertragung von einer Basisstation auf den Funkverkehrskanälen, falls die Übertragung auf diesen Kanälen in der betreffenden Basisstation zu sehr mit dem Empfang der Ruf- und Steuersignale anderer Basisstationen interferiert ; und daß die Sendeunterbrechungsmittel, wo zweckmäßig, so ausgelegt sind, daß sie die Übertragung intermittierend während einer Zeitdauer unterbrechen, die mindestens ebenso lang wie ein Zeitschlitz oder höchstens ebenso lang wie ein Rahmen eines Funkverkehrskanals ist.

6. Ausrüstung nach Anspruch 5, dadurch **gekennzeichnet,** daß die Empfangsmittel bei vorhandenen Zeitschlitzen im Falle, daß keine Information auf irgendeinem Funkverkehrskanal von einer Basisstation gesendet werden muß, für den Empfang von Ruf- und Steuersignalen anderer Basisstationen während dieser Zeitschlitze ausgelegt sind, wenn keine Informationen übertragen werden müssen ; und daß die Zeitdifferenzmeßmittel so ausgelegt sind, daß sie zur Bestimmung möglicher Zeitdifferenzen in erster Linie Ruf- und Steuersignale verwenden, die während dieser Zeitschlitze empfangen werden.

7. Ausrüstung nach Anspruch 6, dadurch **gekennzeichnet,** daß die Zeitmultiplexmittel in einer Basisstation Zeitschlitze auf den Funkverkehrskanälen den Mobilstationen so weit wie möglich derart zuweisen, daß in bestimmten Zeitschlitzen von der Basisstation keine Information auf irgendeinem Funkverkehrskanal gesendet wird.

8. Ausrüstung nach einem beliebigen der Ansprüche 5 bis 7, dadurch **gekennzeichnet,** daß die Sendeunterbrechungsmittel in geeigneten Fällen die Sendung einer Basisstation auf den Funkverkehrskanälen entweder während höchstens eines Rahmens in einem Superrahmen des Funksteuerkanals unterbrechen, oder aber derart, daß kein Zeitschlitz öfter als zweimal im gleichen Superrahmen unterbrochen wird.

## Revendications

1. Procédé de synchronisation et de transmission d'information dans un réseau de télécommunication comportant des stations de base fixes (BS1, BS2,...) et des stations mobiles (MS1, MS2,...) pouvant se déplacer, dans lequel de l'information est transmise entre des stations de base et des stations mobiles sur un ensemble de canaux de trafic de radiocommunication (CH1, CH2,...), les stations de base étant organisées en un système cellulaire, dans une configuration dans laquelle, sous la dépendance du système cellulaire, une trame (F1, F2,...) avec des créneaux temporels (TS0, TS1,...) dans une super-trame, sur un canal de commande de radiocommunication, est attribuée à chaque station de base, des signaux d'appel et de commande étant émis sur le canal de commande de radiocommunication, à partir de chaque station de base vers les stations mobiles, dans la trame de la station de base, à des instants prédéterminés en relation avec une référence de temps interne dans la station de base, ces signaux d'appel et de commande comprenant une information d'identification qui donne l'identité de la station de base émettrice, les stations de base recevant des signaux d'appel et de commande qui sont émis par les autres stations de base sur le canal de commande de radiocommunication, des différences de temps éventuelles entre les références de temps internes des stations de base étant déterminées aux stations de base à l'aide des signaux d'appel et de commande qui sont reçus, de façon que les différences de temps qui sont déterminées soient utilisées aux stations de base pour régler leurs références de temps internes, caractérisé en ce que la transmission d'information entre des stations de base et des stations mobiles sur les canaux de trafic de radiocommunication s'effectue en multiplex temporel, une séquence de créneaux temporels sur un canal de trafic de radiocommunication étant attribuée à chacune des stations mobiles, en ce qu'une information analogique éventuelle qui doit être transférée sur les canaux de trafic de radiocommunication est numérisée avant d'être émise, en ce qu'une information qui doit être émise entre une station de base et une station mobile sur un canal de trafic de radiocommunication est codée avec un code correcteur d'erreurs avant l'émission, ce codage s'étendant sur au moins trois créneaux temporels attribués à la station mobile sur le canal de trafic de radiocommunication, et en ce que si l'émission sur les canaux de trafic de radiocommunication, à partir d'une station de base, perturbe trop fortement la réception à la station de base de signaux d'appel et de commande provenant d'une autre station de base, l'émission est interrompue de façon intermittente pendant une durée qui est au moins égale à un créneau temporel et qui est au plus égale à une trame sur un canal de trafic de radiocommunication.

2. Procédé selon la revendication 1, caractérisé en ce que dans le cas où il existe des créneaux temporels pendant lesquels aucune information ne doit être émise sur un canal de trafic de radiocommunication quelconque à partir d'une station de base, la réception à cette station de base de signaux d'appel et de commande provenant d'autres stations de base sur le canal de commande de radiocommunication s'effectue pendant ces créneaux temporels au cours desquels aucune information ne doit être émise, et en ce que des signaux d'appel et de commande qui sont reçus pendant les créneaux temporels au cours desquels aucune information ne doit être émise sont utilisés essentiellement pour déterminer des différences de temps à la station de base, grâce à quoi la nécessité d'interrompre l'émission sur les canaux de trafic de radiocommunication à la station de base est réduite ou éliminée.

3. Procédé selon la revendication 2, caractérisé en ce que les stations mobiles qui sont associées à une station de base ont, dans la mesure du possible, des créneaux temporels attribués sur les canaux de trafic de radiocommunication, qui sont choisis de façon qu'aucune information ne doive être émise sur un tel canal, à partir de la station de base, au cours de certains créneaux temporels.

4. Procédé selon l'une quelconque des revendications précédentes, caractérisé en ce que l'émission sur les canaux de trafic de radiocommunication, à partir d'une station de base, est interrompue soit pendant au plus l'une des trames d'une super-trame quelconque sur le canal de commande de radiocommunication, soit de façon qu'aucun créneau temporel ne soit interrompu plus de deux fois dans la même super-trame, pour ne pas perturber trop fortement la réception de signaux d'appel et de commande à la station de base.

5. Equipement pour la synchronisation et la transmission d'information dans un réseau de radiocommunication, ce réseau comprenant des stations de base (BS1, BS2,...) et des stations mobiles (MS1, MS2,...) qui sont conçues pour transmettre entre elles de l'information sur un ensemble de canaux de trafic de radiocommunication (CH1, CH2,...), les stations de base étant organisées en un système cellulaire et se partageant l'utilisation d'un canal de commande de radiocommunication en multiplex temporel, sous la dépendance du système cellulaire, de façon que chaque station de base dispose d'une trame (F1, F2,...), avec des créneaux temporels, dans une super-trame sur le canal de commande de radiocommunication, les stations de base comprenant des moyens (31, 35) destinés à émettre vers les stations mobiles des signaux d'appel et de commande sur le canal de commande de radiocommunication, dans leurs trames, à des instants prédéterminés en relation avec leurs références de temps internes respectives, ces signaux d'appel et de commande contenant une information d'identification qui donne l'identité des stations de base émettrices, cet équipement comprenant :

a) des moyens de réception (32, 37) aux stations de base, qui sont destinés à recevoir des signaux d'appel et de commande qui sont émis par les autres stations de base sur le canal de commande de radiocommunication,

b) des moyens de mesure de différence de temps (38), aux stations de base, pour déterminer avec l'aide des signaux d'appel et de commande reçus, des différences de temps possibles entre les références de temps internes des stations de base, et

c) des moyens de régulation (40), aux stations de base, pour régler les références de temps internes des stations de base, avec l'aide de différences de temps éventuelles qui ont été déterminées,

l'équipement étant caractérisé par des moyens de multiplexage temporel (36), aux stations de base, qui sont destinés à transmettre de l'information entre les stations de base et les stations mobiles, en multiplex temporel, sur les canaux de trafic de radiocommunication, ces moyens de multiplexage étant conçus de façon à attribuer à chacune des stations mobiles, au moment de l'émission, une succession de créneaux temporels sur un canal de trafic de radiocommunication, par des moyens de numérisation (11), aux stations mobiles, qui sont destinés à numériser une information analogique qui doit être émise sur les canaux de trafic de radiocommunication, par des moyens de codage (12, 45, 46), aux stations de base et aux stations mobiles, qui sont destinés à coder l'information qui doit être transmise entre une station de base et une station mobile sur un canal de trafic de radiocommunication, en utilisant un code correcteur d'erreurs qui s'étend sur au moins deux créneaux temporels successifs de la station mobile, sur le canal de trafic de radiocommunication, par des moyens d'interruption d'émission, aux stations de base, qui sont destinés à interrompre par intermittence l'émission sur les canaux de trafic de radiocommunication, à partir d'une station de base, si l'émission sur de tels canaux perturbe trop fortement la réception à la même station de base de signaux d'appel et de commande provenant d'autres stations de base, et en ce que les moyens d'interruption d'émission sont conçus de façon à interrompre l'émission par intermittence, lorsque c'est approprié, pendant une durée qui est au moins égale à un créneau temporel et qui est au plus égale à une trame, sur un canal de trafic de radiocommunication.

6. Equipement selon la revendication 5, caractérisé en ce que, dans la situation dans laquelle il existe des créneaux temporels pendant lesquels aucune information ne doit être émise sur un canal de trafic de radiocommunication quelconque à partir d'une station de base, les moyens de réception sont conçus de façon à recevoir des signaux d'appel et de commande provenant d'autres stations de base pendant ces créneaux temporels au cours desquels aucune information ne doit être émise, et en ce que les moyens de mesure de différence de temps sont conçus de façon à utiliser principalement des signaux d'appel et de commande qui sont reçus pendant ces créneaux temporels, pour déterminer des différences de temps éventuelles.

7. Equipement selon la revendication 6, caractérisé en ce que les moyens de multiplexage temporel à une station de base attribuent des créneaux temporels sur les canaux de trafic de radiocommunication aux stations mobiles pour faire en sorte que, dans la mesure du possible, aucune information ne soit émise sur un canal de trafic de radiocommunication quelconque, à partir de la station de base, dans certains créneaux temporels.

8. Equipement selon l'une quelconque des revendications 5-7, caractérisé en ce que les moyens d'interruption d'émission interrompent, dans des cas appropriés, l'émission sur les canaux de trafic de radiocommunication à partir d'une station de base, soit pendant l'une au plus des trames dans une supertrame sur le canal de commande de radiocommunication, soit de façon qu'aucun créneau temporel ne soit interrompu plus de deux fois dans la même supertrame.

Fig.1

EP 0 286 614 B1

**CH1** | MS 1 | MS 2 | MS 3 | MS 4 | MS 10 | | | | MS 1 | MS 2 | MS 3 | MS 4 | MS 10 | | | | MS 1 | MS 2 | MS 3 | MS 4 | MS 10 | | | |

TS0 TS1 TS2 TS3 TS4 TS5 TS6 TS7 TS0 TS1 TS2 TS3 TS4 TS5 TS6 TS7 TS0 TS1 TS2 TS3 TS4 TS5 TS6 TS7

**CH2** | | MS 9 | MS 12 | MS 8 | MS 14 | MS 11 | | | | MS 9 | MS 12 | MS 8 | MS 14 | MS 11 | | | | MS 9 | MS 12 | MS 8 | MS 14 | MS 11 | | |

TS0 TS1 TS2 TS3 TS4 TS5 TS6 TS7 TS0 TS1 TS2 TS3 TS4 TS5 TS6 TS7 TS0 TS1 TS2 TS3 TS4 TS5 TS6 TS7

## Fig.2

| F1 | F2 | F3 |
|---|---|---|
| BS1 | BS2 | BS3 |

TS0 TS1 TS2 TS3 TS4 TS5 TS6 TS7 TS0 TS1 TS2 TS3 TS4 TS5 TS6 TS7 TS0 TS1 TS2 TS3 TS4 TS5 TS6 TS7

| F4 | F5 | F6 |
|---|---|---|
| BS4 | BS5 | BS6 |

TS0 TS1 TS2 TS3 TS4 TS5 TS6 TS7 TS0 TS1 TS2 TS3 TS4 TS5 TS6 TS7 TS0 TS1 TS2 TS3 TS4 TS5 TS6 TS7

| F7 | F8 | F9 |
|---|---|---|
| BS7 | BS8 | BS9 |

TS0 TS1 TS2 TS3 TS4 TS5 TS6 TS7 TS0 TS1 TS2 TS3 TS4 TS5 TS6 TS7 TS0 TS1 TS2 TS3 TS4 TS5 TS6 TS7

## Fig.3

Fig.4

Fig.5

EP 0 286 614 B1